# EUROPEAN PATENT APPLICATION

(11) **EP 2 557 865 A1**
(43) Date of publication of application: **13.02.2013**
(21) Application number: 11765952.4
(22) Date of filing: 06.04.2011
(51) Int. Cl.: H04W 52/24, H04W 52/16, H04W 52/58, H04W 72/08, H04W 72/12

(54) **BASE STATION AND TRANSMISSION CONTROL METHOD**

(30) Priority: 07.04.2010 JP 2010088594
(71) Applicant: Mitsubishi Electric Corporation, Tokyo 100-8310 (JP); NTT DOCOMO, INC., Chiyoda-ku Tokyo 100-6150 (JP)
(72) Inventor: TANI, Shigenori, Tokyo 100-8310 (JP); YAJIMA, Tatsuro, Tokyo 100-6150 (JP); HANAKI, Akihito, Tokyo 100-6150 (JP)
(74) Representative: Pfenning, Meinig & Partner GbR
(86) International application number: PCT/JP2011/058726
(87) International publication number: WO 2011/126052

(57) **Abstract**

The present invention provides a base station (200) that gives a transmission opportunity to a mobile station present in an area of the base station in a unit of a predetermined time length, and controls a transfer rate of an uplink by specifying power of a data transfer channel by a power ratio to a specific channel for which predetermined power control is executed. The base station (200) includes a power measurement unit (212) that measures power of each channel constituting a reception signal, and an EUL control unit (213) that calculates a free resource based on reception power of each channel and determines a power ratio between a data transfer channel through which the mobile station performs transmission and the specific channel, based on a size of data received most recently from the mobile station to which the transmission opportunity is given, the free resource, required communication quality predetermined for each size of reception data, and most recent reception power of the specific channel.

## Description

### Field

The present invention relates to a base station and a transfer control method in a wireless communication system.

### Background

When data transmission and reception are performed in a wireless system including a plurality of mobile stations and a base station, it is desired that a transfer rate of a radio link can be flexibly changed according to the type of data in order to effectively utilize resources in a wireless band (a wireless resource) and hardware resources. In HSPA (High Speed Packet Access) standardized by the 3GPP (3rd Generation Partnership Project), which is a standards body of a third-generation mobile communication system, a transfer control function that has been conventionally performed by a radio link control station is arranged in a base station, thereby enabling to execute highly accurate transfer control. The HSPA includes HSDPA (High Speed Downlink Packet Access) for a downward direction and an EUL (Enhanced Uplink) for an upward direction.

The HSDPA and the EUL are both a part of W-CDMA (Wideband Code Division Multiple Access) standardized by the 3GPP, and the wireless resources use the same frequency and time, and a multiple access is realized by using a same frequency and time for wireless resources, and orthogonalizing pieces of data by an orthogonal code. As a method of controlling a data transfer rate, there are a method of changing an encoding rate of data, a method of changing a data spreading rate, and a method of changing a modulation method. All of these methods have a reciprocity between a transfer rate and an error rate. It is desired to increase an SINR (Signal Interference Noise Ratio) by allocating more power to a desired wave and determine a transfer rate that satisfies a desired error rate, from the viewpoint of QoS (Quality of Service). In the EUL, a desired SINR is satisfied by controlling transmission power of a DPCCH (Dedicated Physical Control Channel), and transmission power of an E-DPDCH (E-DCH (Enhanced Dedicated Channel) Dedicated Physical Data Channel) is controlled by a power ratio to the DPCCH notified from the base station. The E-DPDCH can change the data transfer rate by changing the encoding rate and spreading rate of data according to the power ratio. That is, the base station can satisfy a desired error rate by controlling the transmission power of the DPCCH of a mobile station, and can flexibly control the transfer rate by allocating the transmission power of the E-DPDCH to free resources.

As a base station to be used, a base station (a femto base station) with a much smaller size, lower cost, and lower power consumption as compared to a conventional base station has attracted attention, in order to ensure a sufficient SINR in a building and on upper floors. It is assumed that the femto base station is installed in a dead zone such as houses and office floors. Although the number of simultaneously connectable mobile stations is as few as several stations, the femto base station has a high SINR and can realize high-speed data transfer because the distance between the mobile station and the base station is short. It is desired that the femto base station applies a simple transfer control method in order to achieve downsizing, low cost, and low power consumption. As an application technology thereof, a method of applying Time & Rate Control to the EUL can be considered.

In the Time & Rate Control, when a plurality of mobile stations are present in an area of the base station, the mobile stations repeat a transmission suspended state and a transmission enabled state in order to change over a transmission opportunity of the E-DPDCH with an arbitrary time interval. However, according to the description in Non Patent Literature 1 mentioned below, there is a problem that a difference of about 30 decibels in the power ratio between the transmission suspended state and the transmission enabled state occurs, and an interference level of an uplink with respect to other mobile stations and other cells suddenly increases.

The mobile station can suppress variations in reception power in the base station to a certain value or less by increasing power in a stepwise manner from the transmission suspended state to an upper limit of power that can be received by the base station. For example, Patent Literature 1 mentioned below discloses a technology in which a base station notifies a mobile station of a maximum allowable transfer rate, and the mobile station increases transmission power of the E-DPDCH at a predetermined step.

### Citation List

### Patent Literature

Patent Literature 1: International Publication No. WO 2006/095871

### Non Patent Literature

Non Patent Literature 1: 3GPP TS 25.321 V6.14.0

### Summary

### Technical Problem

However, according to the conventional technology described above, although the data transfer rate can be changed by allocating transmission power of the E-DPDCH to free resources, generally, as the data transfer rate increases, the SINR satisfying a desired error rate increases, and as the data transfer rate decreases, the SINR satisfying the desired error rate decreases. That is, when the required SINR varies with a change in the transfer rate, power of the DPCCH varies. As a result, the power of the E-DPDCH expressed as a power ratio to the DPCCH also varies, and accordingly there is a problem that the resources cannot be allocated properly. For example, when control is executed such that more power is allocated to the E-DPDCH to increase the transfer rate, the desired error rate may not be satisfied. On the other hand, when control is executed such that less power is allocated to the E-DPDCH to decrease the transfer rate, the free resources may not be fully consumed (all the resources may not be allocated), thereby decreasing the transfer efficiency.

Furthermore, in the Time & Rate Control, the transfer rate of the mobile stations needs to be changed frequently, free resources need to be accurately obtained with respect to the reception power, which changes momentarily.

The present invention has been achieved to solve the above problems, and an object of the present invention is to provide a base station and a transfer control method for allocating free resources without any waste and maximizing a throughput by estimating an amount of change of a required SINR and allocating appropriate power to an E-DPDCH even when the transfer rate is flexibly changed in an uplink.

### Solution to Problem

In order to solve above-mentioned problems and achieve the object of the present invention, there is provided a base station that gives a transmission opportunity to a mobile station present in an area of the base station in a unit of a predetermined time length, and controls a transfer rate of an uplink by specifying power of a data transfer channel by a power ratio to a specific channel for which predetermined power control is executed, the base station including: a power measurement unit that measures power of each channel constituting a reception signal; a free-resource calculation unit that calculates a free resource based on reception power of the each channel; and an uplink control unit that determines a power ratio between a data transfer channel through which the mobile station performs transmission and the specific channel, based on a size of data received most recently from the mobile station to which the transmission opportunity is given, the free resource, required communication quality predetermined for each size of reception data, and most recent reception power of the specific channel. Advantageous Effects of Invention

According to the present invention, even when a required SINR of a DPCCH varies due to a change in the transfer rate of an E-DPDCH, a transfer format (a power ratio between the E-DPDCH and the DPCCH) for allocating free resources to the maximum extent can be determined, thereby enabling to improve the throughput of an uplink. Brief Description of Drawings

FIG. 1 is a configuration example of a wireless communication system including a base station according to the present invention.
FIG. 2 depicts physical channels used for communication between a mobile station and a base station.
FIG. 3 is an example of transmission power to be allocated to each channel by the base station in an EUL.
FIG. 4 is a configuration example of the base station.
FIG. 5 is a configuration example of the mobile station.
FIG. 6 is a flowchart of an example of a determining procedure of a transfer format in a base station according to a first embodiment.
FIG. 7 is a flowchart of an example of a determining procedure of a transfer format in a base station according to a second embodiment.

### Description of Embodiments

Exemplary embodiments of a base station and a transfer control method according to the present invention will be explained below in detail with reference to the accompanying drawings. The present invention is not limited to the embodiments.

### First embodiment.

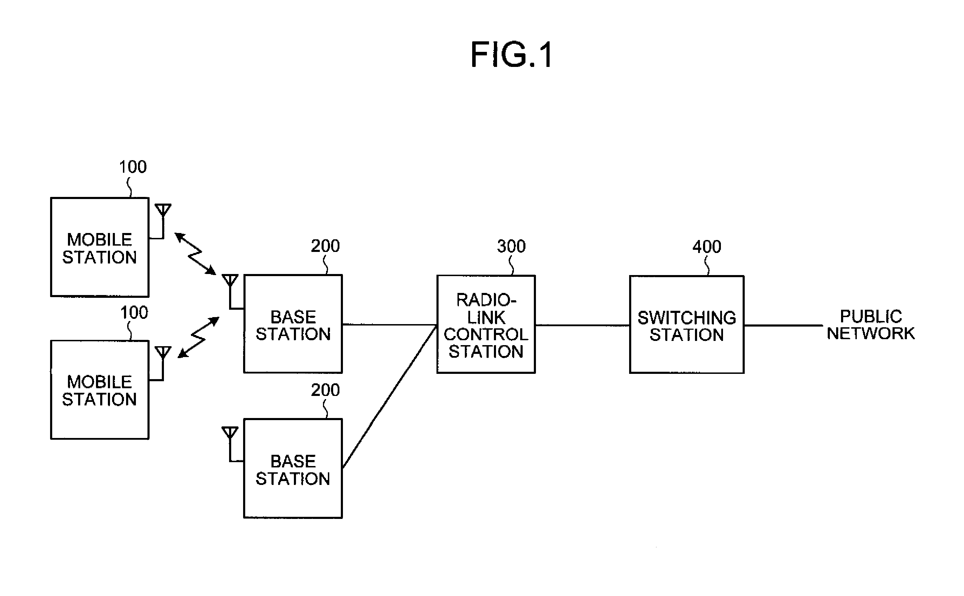

FIG. 1 is a configuration example of a wireless communication system (hereinafter, "communication system") including a base station according to the present invention. The communication system includes at least one mobile station 100 (shown as two in FIG. 1), at least one base station 200 (shown as two in FIG. 1), a radio-link control station 300, and a switching station 400. Each mobile station 100 communicates with any one of the base stations 200 via a radio link. The respective base stations 200 are controlled by the radio-link control station 300. The mobile station 100 can transmit and receive data to and from a public network via the switching station 400 through the base station 200 and the radio-link control station 300.

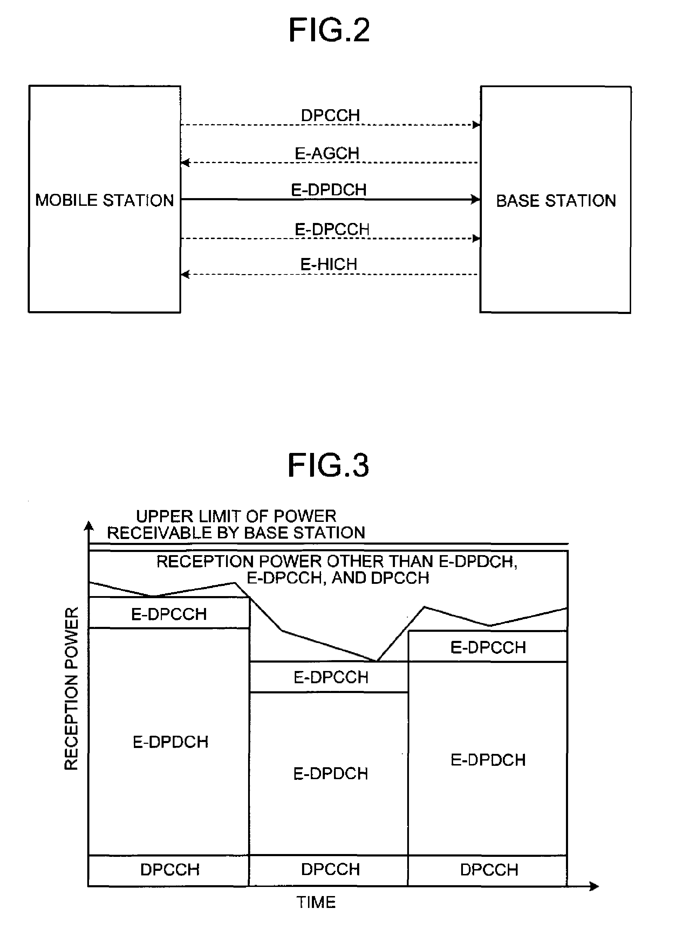

FIG. 2 depicts physical channels used for communication between the mobile station 100 and the base station 200. In FIG. 2, the solid line represents a physical channel that transfers a data signal, the dotted line represents a physical channel that transfers a control signal, and the arrow direction indicates a direction in which a signal is transmitted.

A DPCCH (Dedicated Physical Control Channel) is a physical channel transmitted from the mobile station 100 to the base station 200, and is used at a time of measuring the SINR of an uplink in the base station 200. The DPCCH is spread and modulated by a code different for each mobile station 100.

An E-AGCH (E-DCH (Enhanced Dedicated Channel) Absolute Grant Channel) is a physical channel transmitted from the base station 200 to the mobile station 100, and is used at a time of transmitting information of a transmission power ratio between an E-DPDCH (E-DCH Dedicated Physical Data Channel) described later and the DPCCH. The E-AGCH is shared between a plurality of mobile stations 100.

The E-DPDCH is a physical channel transmitted from the mobile station 100 to the base station 200, and is used at a time of transmitting user data generated by a higher-order function of the mobile station 100 to the base station 200. The E-DPDCH is spread and modulated by a code different for each mobile station 100.

An E-DPCCH (E-DCH Dedicated Physical Control Channel) is a physical channel transmitted from the mobile station 100 to the base station 200, and is used at a time of transmitting information of a transfer format of the E-DPDCH (details thereof are described later). The E-DPCCH is spread and modulated by a code different for each mobile station 100.

An E-HICH (E-DCH HARQ (Hybrid Automatic Repeat reQuest) Indicator Channel) is a physical channel transmitted from the base station 200 to the mobile station 100, and is used at a time of transmitting a decoding result of the E-DPDCH transmitted from the mobile station 100. The E-HICH is shared between the mobile stations 100.

A frame format of the physical channel shown in FIG. 2 is defined such that "slot" is a minimum unit, a set of 3 slots is "sub frame", and a set of 15 slots (5 sub frames) is "frame".

A basic operation of transfer rate control in the EUL (Enhanced Uplink) according to the present embodiment is explained here. FIG. 3 is an example of transmission power to be allocated to each channel by the base station 200. The horizontal axis denotes a time, and the vertical axis denotes transmission power (reception power as seen from the base station 200) to be allocated to each channel in the uplink through which the mobile station 100 performs transmission to the base station 200.

When permitting transmission to a certain mobile station 100, the base station 200 first calculates reception power and interference power of a channel other than the E-DPDCH, and allocates a value obtained by subtracting the reception power and the interference power from an upper limit of power that the own station (the base station 200) can receive to the reception power of the E-DPDCH. The base station 200 then measures the reception power of the DPCCH, and transmits information of a ratio (Absolute Grant Value) between the reception power of the DPCCH and the reception power of the E-DPDCH to the mobile station 100 by using the E-AGCH.

The mobile station 100 determines a transfer format (E-TFCI: E-DCH Transport Format Combination Indicator) of the E-DPDCH based on the information (Absolute Grant Value) received from the base station 200 and the transmission power of the DPCCH. The transfer format is obtained by indexing a transmission data size derived from a combination of a spreading rate and an encoding rate (information of the transmission data size). Although detailed explanations thereof are omitted, the transmission power of the DPCCH is instructed from the base station 200 according to a conventionally used method, and becomes a value according to an most recent instruction content. The mobile station 100 uses the E-DPCCH to transmit the transfer format (information of the transmission data size) to the base station 200. Furthermore, the mobile station 100 clips a portion of the data size corresponding to the determined transfer format from a data signal held therein and transmits the clipped portion to the base station 200 by using the E-DPDCH.

In this manner, the base station 200 allocates the power of the physical channel (the E-DPDCH) for transmitting the data signal to the maximum extent, and further notifies the mobile station 100 of the power ratio between the DPCCH and the E-DPDCH, thereby enabling to control the transfer rate in the EUL flexibly. In the present embodiment, because the Time & Rate Control is assumed, the transmission power that can be allocated to the E-DPDCH varies in a predetermined time interval.

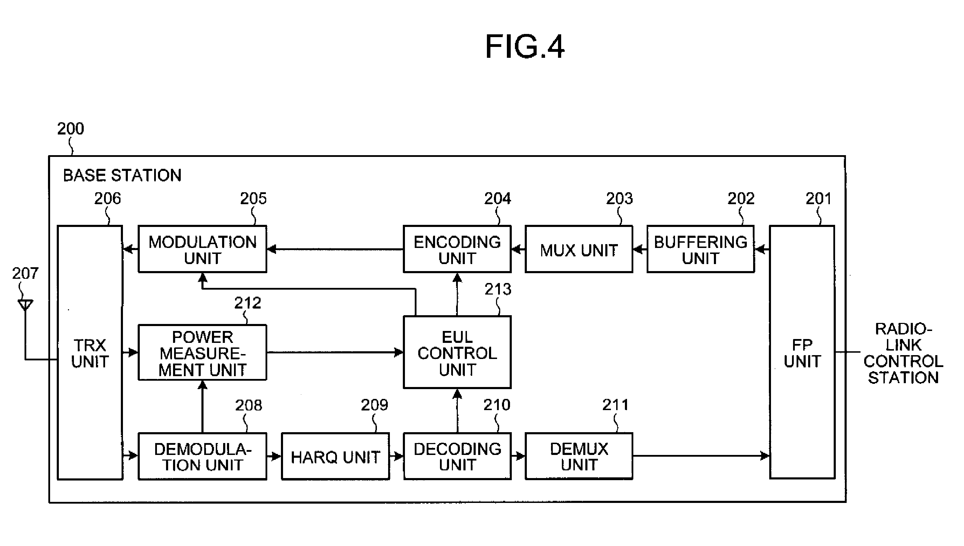

Configurations of the base station 200 and the mobile station 100 constituting the communication system shown in FIG. 1 are explained next. FIG. 4 is a configuration example of the base station 200. The base station 200 includes an FP (Frame Protocol) unit 201, a buffering unit 202, a MUX unit 203, an encoding unit 204, a modulation unit 205, a TRX (transmission and reception) unit 206, an antenna 207, a demodulation unit 208, a HARQ (Hybrid Automatic Repeat reQuest) unit 209, a decoding unit 210, a DEMUX unit 211, a power measurement unit 212, and an EUL control unit 213.

The FP unit 201 performs transmission and reception of data according to a protocol determined between the radio-link control station 300 and the base station 200. The buffering unit 202 temporarily stores data received by the FP unit 201. The MUX unit 203 clips a desired data size from the buffering unit 202. The encoding unit 204 performs error correction encoding with respect to data clipped by the MUX unit 203. The modulation unit 205 spreads data encoded by the encoding unit 204 by an orthogonal code and maps the data on a complex plane by a modulation method instructed by the EUL control unit 213. The TRX unit 206 converts the data modulated by the modulation unit 205 to a radio frequency band signal, and converts the radio frequency band signal received by the antenna 207 to a baseband modulation signal. The antenna 207 transmits and receives the radio frequency band signal to and from the mobile station 100.

The demodulation unit 208 despreads the signal received from the mobile station 100 by an orthogonal code to demodulate the signal. The HARQ unit 209 synthesizes the demodulated data by retransmission control. The decoding unit 210 decodes the data synthesized by the HARQ unit 209 and performs an error determination. The DEMUX unit 211 separates successfully decoded data into data units handled by the FP unit 201. The power measurement unit 212 measures the reception power and the interference power of the signal demodulated by the demodulation unit 208. The EUL control unit 213 has functions as free-resource calculation means and uplink control means, and executes transfer control of the E-DPDCH through which the mobile station 100 performs transmission.

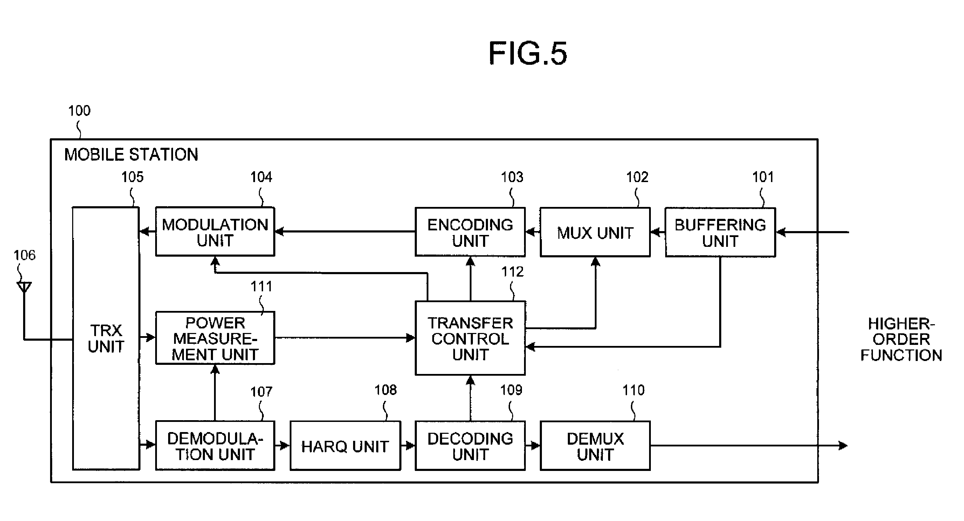

FIG. 5 is a configuration example of the mobile station 100. The mobile station 100 includes a buffering unit 101, a MUX unit 102, an encoding unit 103, a modulation unit 104, a TRX unit 105, an antenna 106, a demodulation unit 107, a HARQ unit 108, a decoding unit 109, a DEMUX unit 110, a power measurement unit 111, and a transfer control unit 112.

The buffering unit 101 temporarily stores data generated by a higher-order function including an application. The MUX unit 102 clips data instructed by the transfer control unit 112 from the buffering unit 101. The encoding unit 103 performs error correction encoding with respect to data clipped by the MUX unit 102. The modulation unit 104 spreads data encoded by the encoding unit 103 by an orthogonal code and maps the data on a complex plane by a modulation method instructed by the transfer control unit 112. The TRX unit 105 converts the data modulated by the modulation unit 104 to a radio frequency band signal, and converts the radio frequency band signal received by the antenna 106 to a baseband modulation signal. The antenna 106 transmits and receives the radio frequency band signal to and from the base station 200.

The demodulation unit 107 de-spreads the signal received from the base station 200 by an orthogonal code to demodulate the signal. The HARQ unit 108 synthesizes the demodulated data by retransmission control. The decoding unit 109 decodes the data synthesized by the HARQ unit 108 and performs an error determination. The DEMUX unit 110 separates successfully decoded data into data units handled by a higher-order function. The power measurement unit 111 measures the reception power and the interference power of the signal demodulated by the demodulation unit 107. The transfer control unit 112 executes transfer control according to the control signal received from the base station 200.

An operation when the base station 200 and the mobile station 100 communicate with each other in the communication system according to the present embodiment is explained next. A communication operation in the uplink, which is intended in the present invention, that is, an operation of the EUL that transmits data generated by a higher-order function to the base station 200 is explained here.

When data to be transmitted by a higher-order function is generated, the mobile station 100 is given a transmission opportunity from the base station 200, and holds the data in the buffering unit 101 until transmission is completed. The buffering unit 101 can hold a plurality of buffers. When the plurality of buffers are held, for example, an identifier discriminating the type of application is defined as "logical channel", and the buffering unit 101 can accumulate data for each logical channel or for each group of a plurality of logical channels.

The transfer control unit 112 monitors whether data (data to be transmitted) is accumulated in the buffering unit 101. When the data to be transmitted is accumulated, the transfer control unit 112 instructs the encoding unit 103 to generate a transmission request to the base station 200 to request a transmission opportunity of the data. Furthermore, at this time, the transfer control unit 112 notifies the encoding unit 103 of an amount of data accumulated in the buffering unit 101. By including the amount of data in the transmission request, more accurate transmission request can be generated. Only an amount of data of an arbitrary logical channel among the pieces of data accumulated in the buffering unit 101 can be included in the transmission request.

The encoding unit 103 generates a transmission request according to an instruction content from the transfer control unit 112 and encodes the generated transmission request. As an encoding method, a turbo code and a convolution code have been widely known. However, any encoding method can be used so long as an encoding rule is set between the mobile station 100 and the base station 200. Furthermore, a different encoding method can be used for each type of data to be transmitted (for example, each type of physical channels shown in FIG. 2). In this case, it can be realized by the transfer control unit 112 that instructs an encoding method for each type to the encoding unit 103.

The modulation unit 104 spreads the encoded data of the transmission request generated by the encoding unit 103 by using an arbitrary orthogonal code, and maps the data on the complex plane. As in the encoding unit 103, a different type of orthogonal code, spreading rate, and modulation method can be used according to the type of data. It suffices that the rule for the modulation method is set between the mobile station 100 and the base station 200.

The TRX unit 105 converts the data modulated by the modulation unit 104 to a radio frequency band signal, and transmits the converted signal to the base station 200 via the antenna 106.

The base station 200 receives the radio frequency band signal transmitted from the mobile station 100 via the antenna 207, and converts the received signal to a baseband modulation signal by the TRX unit 206.

The demodulation unit 208 demodulates the modulation signal converted by the TRX unit 206 by despreading. As described above, a different type of orthogonal code, spreading rate, and modulation method can be used for despreading according to the type of data. It suffices that the rule for the demodulation method is set between the mobile station 100 and the base station 200. In the E-DPCCH and the E-DPDCH shown in FIG. 2, a predetermined orthogonal code and modulation method are used, and in the E-DPCCH, the spreading rate is also predetermined. The spreading rate of the E-DPDCH is instructed by a transfer format included in the E-DPCCH. The base station 200 first demodulates and decodes the E-DPCCH to acquire a transfer format included in the E-DPCCH, and derive the spreading rate of the E-DPDCH from the transfer format, thereby enabling to despread the E-DPDCH.

The HARQ unit 209 temporarily accumulates data demodulated by the demodulation unit 208, and if decoding is failed in the decoding unit 210, the HARQ unit 209 synthesizes retransmission data transmitted from the mobile station 100 and the temporarily accumulated data. When decoding is successful, the HARQ unit 209 deletes the data accumulated therein. Furthermore, because the HARQ unit 209 can accumulate data in a unit of process of a HARQ by constituting a plurality of buffers, N Channel Stop and Wait retransmission method can be realized.

The decoding unit 210 decodes the data synthesized by the HARQ unit 209 by an error correction code, to perform a decoding determination by CRC (Cyclic Redundancy Check). The decoding unit 210 notifies the EUL control unit 213 of a decoding result by the CRC (whether decoding is successful). The EUL control unit 213 transmits the decoding result to the mobile station 100 through the encoding unit 204 by using the E-HICH (see FIG. 2). When decoding is successful, the decoding unit 210 outputs the decoded data to the EUL control unit 213 and the DEMUX unit 211. Upon reception of the decoding result transmitted by the base station 200 through the E-HICH, the mobile station 100 confirms the content thereof, and if the content indicates a decoding failure, retransmits the data failed in decoding to the base station 200.

The power measurement unit 212 measures reception power and interference power for each physical channel demodulated by the demodulation unit 208, and total reception power of signals received by the TRX unit 206, and notifies the EUL control unit 213 of measurement results.

The EUL control unit 213 selects one mobile station 100 to which a transmission opportunity through the E-DPDCH is given, based on the decoded data notified from the decoding unit 210 and the reception power value notified from the power measurement unit 212, and determines a transfer format (details thereof are described later) to be notified to the selected mobile station 100. When a transmission request is included in the decoded data notified from the decoding unit 210, in order to give a transmission opportunity through the E-DPDCH to the mobile station 100 having transmitted the transmission request, the EUL control unit 213 selects the mobile station 100 as the mobile station 100 to which the transmission opportunity through the E-DPDCH is given, and determines a transfer format of the E-DPDCH to be used for transmission of data.

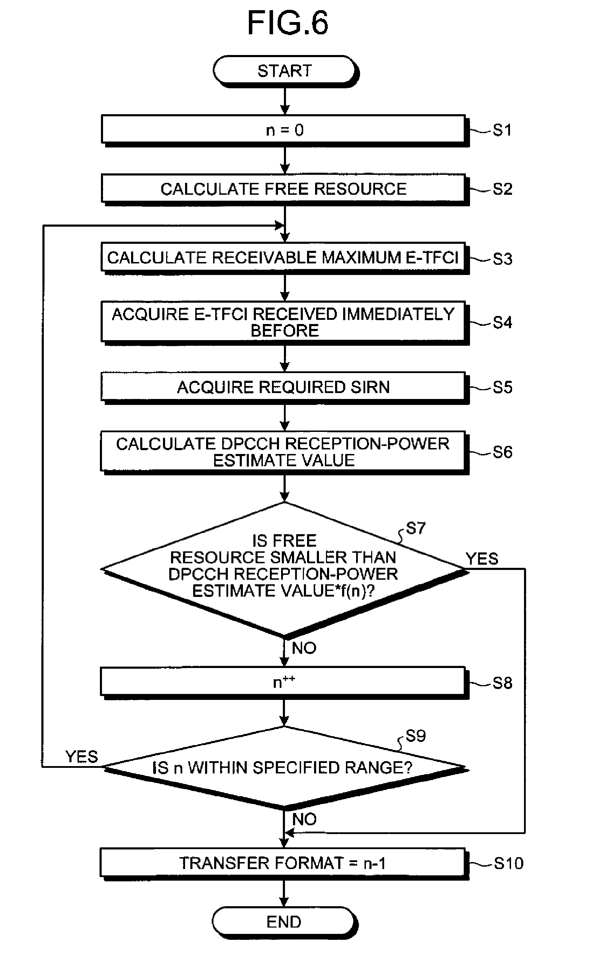

A method of determining a transfer format to be used by the mobile station 100 by the EUL control unit 213, which is a characteristic operation in the base station 200 according to the present embodiment, is explained with reference to FIG. 6. FIG. 6 is a flowchart of an example of a determining procedure of the transfer format in the base station according to the present embodiment.

When the base station 200 determines the transfer format to be used by the mobile station 100 that is given a transmission opportunity through the E-DPDCH, the EUL control unit 213 that performs the process first initializes a transfer format "n" to "0" (Step S1). The transfer format "n" is an index of "Absolute Grant Value" described in Non Patent Literature 1 (3GPP TS 25.321) mentioned above and a Literature "3GPP TS 25.212", and includes 32 types (32 values) of from 0 to 31. Furthermore, the "Absolute Grant Value" is information indicating a power ratio between the E-DPDCH and the DPCCH. That is, the determining procedure of the transfer format shown in FIG. 6 is a procedure for determining the power ratio between the E-DPDCH and the DPCCH.

The EUL control unit 213 acquires reception power and interference power of a channel other than the E-DPDCH from the power measurement unit 212, and calculates a free resource by using these powers (Step S2). Specifically, the EUL control unit 213 determines a value acquired by subtracting the reception power and the interference power of the channel other than the E-DPDCH from an upper limit of power that can be received by the own station (the base station 200) as a free resource.

The EUL control unit 213 then obtains a receivable maximum E-TFCI (the maximum size of data to be transmitted by the E-DPDCH) from the transfer format "n" (Step S3). The receivable maximum E-TFCI can be obtained by a method described in Non patent literature 1 mentioned above by using the number of bits of reference E-TFCI, the number of channels of the reference E-TFCI, a power ratio between the reference E-TFCI and the DPCCH, a inherent offset value (a delta HARQ), and the transfer format "n" notified from a higher-order functional unit than the EUL control unit 213.

Next, the EUL control unit 213 acquires an E-TFCI (information indicating the size of data notified from the mobile station 100 and transmitted via the E-DPDCH) from a decoding result of the E-DPCCH notified from the decoding unit 210 (Step S4). The E-TFCI is described in Non Patent Literature 1, and has a different range of value based on a TTI (Transmission Time Interval). For example, when the TTI is 2 milliseconds, the E-TFCI has 128 types of from 0 to 128, and when the TTI is 10 milliseconds, the E-TFCI has 121 types of from 0 to 120. When the E-DPCCH has not been received at the timing at which the process shown in FIG. 6 is performed, the E-TFCI included in the E-DPCCH received at an most recent reception timing back from the timing is used.

Subsequently, a required SINR of the receivable maximum E-TFCI obtained at Step S3 (required SINR corresponding to the receivable maximum E-TFCI) is looked up in a table showing a correspondence relation with the required SINR satisfying an arbitrary E-TFCI and a desired BLER (Block Error Rate) stored in advance. Similarly, a required SINR of the E-TFCI acquired at Step S4 is looked up in the table (Step S5). A plurality of tables showing the correspondence relation between the E-TFCI and the required SINR need to be held according to the number of points of the BLER. However, the number of tables can be reduced by preparing only a table for the required SINR satisfying an arbitrary BLER (for example, BLER 10%) (referred to as "a reference table" for convenience sake of explanation), and expressing another BLER (for example, BLER =50%) by a fixed offset from the reference table. Similarly, the number of arrays in the table is up to 128 according to the number of points of the E-TFCI. However, the number of arrays in the table can be reduced by preparing only a table for the required SINRs satisfying an arbitrary BLER for every k E-TFCIs (k is an integer), and obtaining a required SINR corresponding to an E-TFCI (other than the every k E-TFCIs) between the every k E-TFCIs by interpolation (for example, linear interpolation).

Subsequently, the reception power of the DPCCH acquired from the power measurement unit 212, the required SINR of the receivable maximum E-TFCI obtained at Step S5, and the required SINR of the E-TFCI included in the E-DPCCH received most recently are used to calculate a DPCCH reception-power estimate value according to the following equation (Step S6).

(DPCCH reception-power estimate value)= reception power of DPCCH -("required SINR of E-TFCI received most recently" - "required SINR of maximum receivable E-TFCI")

Subsequently, a "Table 16B" described in Literature "3GPP TS 25.212" is looked up based on the free resource obtained at Step S2, the DPCCH reception-power estimate value obtained at Step S6, and the transfer format "n" at this point. It is then confirmed whether a criterion formula "free resource < DPCCH reception-power estimate value xf(n)" is established by using a power ratio f(n) between the DPCCH and the E-DPDCH acquired as a result thereof (Step S7).

When the above criterion formula has not been established (NO at Step S7), it is determined that there is a possibility that a larger transfer format is allocated, that is, there is a possibility that even if the larger transfer format is allocated, the reception power of the E-DPDCH does not exceed the free resource, and (n) is incremented by 1 (Step S8). If (n) after being incremented is within a specified range (YES at Step S9), the procedure proceeds to Step S3, to perform processes after Step S3 with respect to (n) after being incremented. On the other hand, when it is determined that the above criterion formula is established (YES at Step S7), if (n) at this point is determined as the transfer format, the reception power of the E-DPDCH exceeds the free resource. Therefore, (n-1) is determined as the transfer format (Step S10). Furthermore, when it is determined that (n) after being incremented is without the specified range at Step S9, that is, it is determined that (n) has exceeded the upper limit (NO at Step S9), (n-1) as the upper limit is determined as the transfer format (Step S10).

By performing Steps S1 to S10 mentioned above, the EUL control unit 213 determines the transfer format (a power ratio between the E-DPDCH and the DPCCH). Upon determination of the transfer format, the EUL control unit 213 notifies the encoding unit 204 of the power ratio between the E-DPDCH and the DPCCH as a determination result.

Upon reception of the determination result of the transfer format (a power ratio between the E-DPDCH and the DPCCH) from the EUL control unit 213, the encoding unit 204 encodes the transfer format and outputs the encoded data to the modulation unit 205. The encoding method can be any method, so long as the encoding rule is set between the mobile station 100 and the base station 200, as in the encoding unit 103 of the mobile station 100. Furthermore, a different encoding method can be used for each type of data to be transmitted (for example, each type of physical channels shown in FIG. 2). In this case, it can be realized by the EUL control unit 213 that instructs an encoding method for each type to the encoding unit 204.

The modulation unit 205 spreads data encoded by the encoding unit 204 (data obtained by encoding the determination result of the transfer format) by an arbitrary orthogonal code and maps the data on a complex plane. As in the encoding unit 204, a different type of orthogonal code, spreading rate, and modulation method can be used according to the type of data. It suffices that the rule for the modulation method is set between the mobile station 100 and the base station 200.

The TRX unit 206 receives the data modulated by the modulation unit 205, converts the data to a radio frequency band signal, and transmits the converted signal to the mobile station 100 via the antenna 207.

Meanwhile, the mobile station 100 receives the radio frequency band signal transmitted from the base station 200 via the antenna 106, and converts the received signal to a baseband modulation signal by the TRX unit 105.

The demodulation unit 107 demodulates the modulation signal converted by the TRX unit 105 by despreading. The demodulated data is output to the HARQ unit 108 and the power measurement unit 111. A different type of orthogonal code, spreading rate, and modulation method can be used for despreading according to the type of data, as in the demodulation unit 208 of the base station 200. It suffices that the rule for the demodulation method is set between the mobile station 100 and the base station 200.

The HARQ unit 108 temporarily accumulates data demodulated by the demodulation unit 107, and executes retransmission control. However, in the EUL, the physical channels of a downlink transmitted from the base station 200 are the E-AGCH and the E-HICH for the control signal (see FIG. 2), and an E-RGCH (E-DCH Relative Grant Channel) (not shown). Retransmission control is not executed for these physical channels and data is output to the decoding unit 109. The E-RGCH is a physical channel specified in Non Patent Literature 1 mentioned above, as in the E-AGCH and the E-HICH.

The decoding unit 109 decodes the data received from the HARQ unit 108 by an error correction code, to perform a decoding determination by the CRC. In the downlink of the EUL, the CRC is added to only the E-AGCH. Therefore, the decoding determination by the CRC is not performed for the E-HICH. When decoding of the E-AGCH is successful, the decoding unit 109 notifies the transfer control unit 112 of the decoded data. Regarding the E-HICH, decoded data is notified to the transfer control unit 112 regardless of whether the decoding has been successful.

The power measurement unit 111 measures reception power and interference power of a physical channel into which a known signal is inserted, of the physical channels demodulated by the demodulation unit 107, and notifies a measurement result to the transfer control unit 112.

The transfer control unit 112 determines a data size capable of being transmitted via the E-DPDCH based on the transfer format included in the E-AGCH (a power ratio between the E-DPDCH and the DPCCH), of the decoded data received from the decoding unit 109. The data size is determined by using transmission power of the DPCCH separately specified by the base station 200 and an encoding rate and a spreading rate to be used at the time of transmission, in addition to the transfer format. After the data size has been determined, the transfer control unit 112 instructs the MUX unit 102 to clip data for the determined data size from data accumulated in the buffering unit 101. The transfer control unit 112 also notifies the encoding unit 103 and the modulation unit 104, respectively, of an encoding method and a modulation method to be used at the time of transmitting the data clipped from the buffering unit 101. Furthermore, the transfer control unit 112 refers to a decoding result of the E-DPDCH included in the E-HICH (a decoding result on a side of the base station 200 of data already transmitted), of the decoded data notified from the decoding unit 109. When the decoding result indicates a decoding failure (CRC NG), the transfer control unit 112 retransmits the E-DPDCH already transmitted. On the other hand, when the decoding result indicates successful decoding (CRC OK), the transfer control unit 112 instructs the MUX unit 102, the encoding unit 103, and the modulation unit 104 to transmit new data.

Thereafter, in the mobile station 100, the encoding unit 103 performs encoding with respect to the data clipped by the MUX unit 102, and the modulation unit 104 modulates the data, and the TRX unit 105 transmits the modulated data to the base station 200 via the antenna 106. Operations in respective elements are as explained above. As explained above, the mobile station 100 transmits E-TFCI as the information of the size of transmission data via the E-DPCCH as the transfer format information.

In the base station 200, the E-DPDCH transmitted from the mobile station 100 is received and decoded by the decoding unit 210. Operations in respective elements before the decoding unit 210 are as explained above.

The DEMUX unit 211 receives data decoded by the decoding unit 210, separates the data into data units handled by the FP unit 201, and outputs the separated data to the FP unit 201.

The FP unit 201 converts the data output from the DEMUX unit 211 to a communication protocol handled between the radio-link control station 300 and the base station 200, and transmits the converted data to the radio-link control station 300.

In this manner, in the EUL, the above-described series of operations are repeated for each transmission time unit (TTI) of the E-DPDCH, thereby realizing uplink transfer.

As explained above, in the present embodiment, the EUL control unit 213 in the base station 200 receives a transmission request from the mobile station 100. In a determining process of the transfer format of the E-DPDCH (a power ratio between the E-DPDCH and the DPCCH) with respect to the mobile station 100, the EUL control unit 213 obtains a DPCCH reception-power estimate value after a change of the transfer format from the required SINR of the data of a size received most recently by the base station 200 and the required SINR of the data of a size receivable after the change of the transfer format, and determines the transfer format based on a comparison result between the DPCCH reception-power estimate value and the free resource. Accordingly, even if the required SINR of the DPCCH varies due to a change in the transfer rate of the E-DPDCH, a transfer format that allocates the free resource in the base station 200 to a maximum extent can be determined, thereby enabling to improve a throughput of the uplink.

### Second embodiment.

A second embodiment is explained next. In the first embodiment, when the EUL control unit in the base station determines a transfer format (a power ratio between the E-DPDCH and the DPCCH), as shown in FIG. 6, a free resource is calculated in advance to determine a transfer format, taking into consideration so that the reception power of the E-DPDCH does not exceed the free resource.

Meanwhile, in the present embodiment, it is focused that the power of an uplink physical channel other than the E-DPDCH is also determined by its power ratio to the DPCCH, and a method of determining a transfer format by a procedure different from that of the first embodiment is explained. The configuration of the communication system is assumed to be the same as that of the first embodiment (see FIG. 1). Furthermore, it is assumed that the configurations of the base station and the mobile station constituting the communication system are the same as those of the first embodiment (see FIGS. 4 and 5).

In the communication system according to the present embodiment, the procedure performed by the EUL control unit in the base station is the same as that of the first embodiment, except of a procedure for determining a transfer format (a power ratio between the E-DPDCH and the DPCCH). Therefore, explanations of elements that are in common to those of the first embodiment will be omitted.

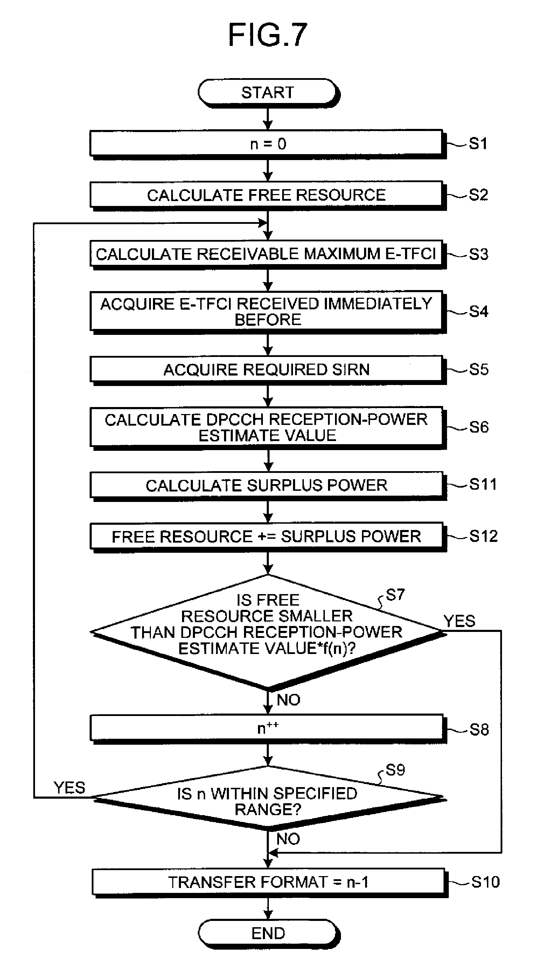

FIG. 7 is a flowchart of an example of a determining procedure of the transfer format in the base station according to the second embodiment. In FIG. 7, like step numbers are given to like processes as those in the transfer format determining procedure (see FIG. 6) explained in the first embodiment. Therefore, explanations of processes denoted by like step number as those shown in FIG. 6 will be omitted.

When the base station 200 in the present embodiment determines a transfer format, the EUL control unit 213 uses the reception power of the DPCCH acquired from the power measurement unit 212 and the DPCCH reception-power estimate value acquired at Step S6, to calculate a total of surplus power of the DPCCH, a HS-DPCCH (HS-DSCH (High Speed Downlink Shared Channel) Dedicated Physical Control Channel) and the E-DPCCH, which are uplink physical channels other than the E-DPDCH, generated due to a change in the reception power of the DPCCH according to the following formula (Step S11).

(surplus power)=(DPCCH reception power - DPCCH reception-power estimate value)×(1+βhs^2+βec^2)

In this equation, βhs is an amplitude ratio between the HS-DPCCH and the DPCCH and βec is an amplitude ratio between the E-DPCCH and the DPCCH. βhs and βec are notified from a higher-order functional unit than the EUL control unit 213. "^" denotes power.

Subsequently, the surplus power obtained at Step S11 is added to the free resource obtained at Step S2 to calculate a final free resource (Step S12). At Step S7, a determining process is performed by using the free resource calculated at Step S12.

In this manner, in the base station according to the present embodiment, when calculating the free resource, the EUL control unit 213 adds surplus power of the uplink physical channels other than the E-DPDCH generated due to a change in the reception power of the DPCCH to the free resource. Accordingly, the free resource can be obtained accurately so as to increase resources that can be allocated to data transfer (the E-DPDCH), thereby enabling to improve the throughput of the uplink.

In the present embodiment, in a process of calculating surplus power, it has been explained such that uplink physical channels other than the E-DPDCH are only the DPCCH, the E-DPCCH, and the HS-DPCCH. However, the uplink physical channels are not limited thereto, and other physical channels can be similarly added as a calculation target of surplus power.

The respective embodiments described above are explained by using physical channel names of the HSPDA and EUL, frame format names, and parameter names standardized by 3GPP. However, applicable systems are not limited to the HSPDA and the EUL. The present invention can be applied to other communication systems in which similar control is executed, that is, the base station controls transfer rate by instructing transmission power of a specific transmission channel and a ratio between powers of respective transmission channels to the mobile station, as a control operation of the transfer rate (a control operation of power allocation to respective transmission channels).

### Industrial Applicability

As described above, the base station according to the present invention is useful for a wireless communication system, and is particularly suitable for a base station that controls a transfer rate by specifying transmission power of a specific channel of an uplink and a power ratio among respective channels with respect to a mobile station.

### Reference Signs List

- 100: MOBILE STATION
- 101, 202: BUFFERING UNIT
- 102, 203: MUX UNIT
- 103, 204: ENCODING UNIT
- 104, 205: MODULATION UNIT
- 105, 206: TRX UNIT
- 106, 207: ANTENNA
- 107, 208: DEMODULATION UNIT
- 108, 209: HARQ UNIT
- 109, 210: DECODING UNIT
- 110, 211: DEMUX UNIT
- 111, 212: POWER MEASUREMENT UNIT
- 112: TRANSFER CONTROL UNIT
- 200: BASE STATION
- 201: FP UNIT
- 213: EUL CONTROL UNIT
- 300: RADIO-LINK CONTROL STATION
- 400: SWITCHING STATION

## Claims

1. A base station that gives a transmission opportunity to a mobile station present in an area of the base station in a unit of a predetermined time length, and controls a transfer rate of an uplink by specifying power of a data transfer channel by a power ratio to a specific channel for which predetermined power control is executed, the base station comprising:
a power measurement unit that measures power of each channel constituting a reception signal;
a free-resource calculation unit that calculates a free resource based on reception power of the each channel; and
an uplink control unit that determines a power ratio between a data transfer channel through which the mobile station performs transmission and the specific channel, based on a size of data received most recently from the mobile station to which the transmission opportunity is given, the free resource, required communication quality predetermined for each size of reception data, and most recent reception power of the specific channel.

2. The base station according to claim 1, wherein
in a determining process of the power ratio,
the uplink control unit
first tentatively determines a power ratio to be specified to the mobile station,
then calculates a maximum data size transferable at a time of using the tentatively determined power ratio,
determines whether to designate the tentatively determined power ratio as a final power ratio, based on the free resource, first communication quality as required communication quality corresponding to the calculated maximum data size, second communication quality as required communication quality corresponding to the size of data received most recently from the mobile station, and most recent reception power of the specific channel,
when the tentatively determined power ratio is not designated as the final power ratio, tentatively re-determines a power ratio to be specified to the mobile station, and performs a calculating process of the maximum data size and a determining process of determining whether to designate the tentatively determined power ratio as the final power ratio with respect to the tentatively re-determined power ratio, and
thereafter repeatedly performs a tentative determining process of the power ratio, the calculating process of the maximum data size, and the determining process of determining whether to designate the tentatively determined power ratio as the final power ratio, until it is determined that "the tentatively determined power ratio is designated as the final power ratio" in the determining process of determining whether to designate the tentatively determined power ratio as the final power ratio.

3. The base station according to claim 2, wherein
in the determining process of determining whether to designate the tentatively determined power ratio as the final power ratio,
reception power of the specific channel at a next time is estimated based on the first and second communication qualities and the most recent reception power of the specific channel, and it is determined whether to designate the tentatively determined power ratio as the final power ratio based on a result obtained by multiplying a power estimation value acquired as a result of estimation by the tentatively determined power ratio, and a comparison result with the free resource.

4. The base station according to claim 3, wherein the power estimation value is obtained by subtracting a difference between the second communication quality and the first communication quality from the most recent reception power of the specific channel.

5. The base station according to claim 2, wherein the uplink control unit holds a table showing communication quality satisfying an arbitrary error rate with respect to an arbitrary data size, and obtains the first and second communication qualities from the table, based on the maximum data size and the size of data received most recently from the mobile station.

6. The base station according to any one of claims 1 to 5, wherein the free-resource calculation unit designates a result obtained by subtracting reception power and interference power of channels other than a data transfer channel from an upper limit of receivable power as a free resource.

7. The base station according to claim 3 or 4, wherein the free-resource calculation unit designates a result obtained by subtracting reception power and interference power of channels other than a data transfer channel from an upper limit of receivable power and adding surplus power calculated based on the most recent reception power of the specific channel and the power estimation value as a free resource.

8. A transfer control method executed by a base station that gives a transmission opportunity to a mobile station present in an area of the base station in a unit of a predetermined time length, and controls a transfer rate of an uplink by specifying power of a data transfer channel by a power ratio to a specific channel for which predetermined power control is executed, the transfer control method comprising:
a power measurement step of measuring power of each channel constituting a reception signal;
a free-resource calculating step of calculating a free resource based on reception power of the each channel; and
a power-ratio determining step of determining a power ratio between a data transfer channel through which the mobile station performs transmission and the specific channel, based on a size of data received most recently from the mobile station to which the transmission opportunity is given, the free resource, required communication quality predetermined for each size of reception data, and most recent reception power of the specific channel.

9. The transfer control method according to claim 8, wherein
at the power-ratio determining step,
first a power ratio to be specified to the mobile station is tentatively determined,
then a maximum data size transferable at a time of using the tentatively determined power ratio is calculated,
it is determined whether to designate the tentatively determined power ratio as a final power ratio, based on the free resource, first communication quality as required communication quality corresponding to the calculated maximum data size, second communication quality as required communication quality corresponding to the size of data received most recently from the mobile station, and most recent reception power of the specific channel,
when the tentatively determined power ratio is not designated as the final power ratio, a power ratio to be specified to the mobile station is tentatively re-determined, to perform a calculating process of the maximum data size and a determining process of determining whether to designate the tentatively determined power ratio as the final power ratio with respect to the tentatively re-determined power ratio, and
thereafter a tentative determining process of the power ratio, the calculating process of the maximum data size, and the determining process of determining whether to designate the tentatively determined power ratio as the final power ratio are repeatedly performed, until it is determined that "the tentatively determined power ratio is designated as the final power ratio" in the determining process of determining whether to designate the tentatively determined power ratio as the final power ratio.

10. The transfer control method according to claim 9, wherein
at the free-resource calculating step,
a provisional free resource is calculated by subtracting reception power and interference power of channels other than a data transfer channel from an upper limit of receivable power as a free resource,
at the power-ratio determining step,
reception power of the specific channel at a next time is estimated based on the first and second communication qualities and the most recent reception power of the specific channel, and surplus power is calculated based on a power estimation value obtained as a result of estimation and the most recent reception power of the specific channel, and
in the determining process of determining whether to designate the tentatively determined power ratio as the final power ratio, a result of adding the surplus power to the provisional free resource is used as the free resource.
